# EUROPEAN PATENT APPLICATION

(11) **EP 2 548 541 A1**
(43) Date of publication of application: **23.01.2013**
(21) Application number: 12176701.6
(22) Date of filing: 17.07.2012
(51) Int. Cl.: A61G 3/06, B60P 1/44

(54) **Lift apparatus for a vehicle**

(30) Priority: 22.07.2011 GB 201112671
(71) Applicant: Passenger Lift Services Limited, West Midlands B69 2RA (GB)
(72) Inventor: Beck, Adam, Warley, West Midlands B69 1JP (GB); Edwards, Paul, Dudley, West Midlands DY1 3HD (GB)
(74) Representative: Wilson, Alan Stuart

(57) **Abstract**

A lift apparatus (100) for a vehicle comprises a movable connection assembly (110), a lift platform (115) and a bridge plate (120). The movable connection assembly (110) is arranged to connect the lift platform (115) to the vehicle. The movable connection assembly (110) is arranged to move the lift platform (115) between a lowered position and a raised position. The bridge plate (120) is connected to the lift platform (115) and is movable relative thereto between a stowed condition and a deployed condition. The bridge plate (120) is arranged, in its deployed condition, to bridge a gap between a raised floor (150) of the vehicle and the lift platform (115) in its raised position. The lift apparatus (100) further comprises one or more guides (160, 170) arranged to translate movement of the lift platform (115) between its raised and lowered positions into movement of the bridge plate (120) between its deployed and stowed conditions.

## Description

The present application relates to a lift apparatus for a vehicle, for example a lift apparatus for providing access to a vehicle with a raised floor.

It is known to provide a vehicle with a lift apparatus that can be stowed, e.g. under the floor of the vehicle, and then deployed into a condition in which it can be lowered to the ground and raised to a position approximately level with a raised floor of the vehicle, for access to the vehicle.

Such a lift apparatus is commonly used in city-to-city buses in mainland Europe.

The invention provides a lift apparatus for a vehicle, comprising a movable connection assembly, a lift platform and a bridge plate, comprising any one or more of the following features: the movable connection assembly is arranged to connect the lift platform to the vehicle; the movable connection assembly is arranged to move the lift platform between a lowered position and a raised position; the bridge plate is connected to the lift platform and is movable relative thereto between a stowed condition and a deployed condition; and the bridge plate is arranged, in its deployed condition, to bridge a gap between a raised floor of the vehicle and the lift platform in its raised position; the lift apparatus further comprises one or more guides arranged to translate movement of the lift platform between its raised and lowered positions into movement of the bridge plate between its deployed and stowed conditions.

The one or more guides obviate the need for actuation means, such as hydraulic actuators, to move the bridge plate towards its stowed condition. Therefore, a cheaper and more reliable lift apparatus can be implemented according to the present invention.

The one or more guides may be passive, non-driven, non-motorised and/or non-hydraulic.

In its deployed condition, the bridge plate may extend across the gap between, and be supported by, the floor of the vehicle and the lift platform in its raised position.

The lift apparatus may include various means to influence, e.g. guide or control, movement of the bridge plate between its deployed and stowed conditions. For instance, a damper may be connected to the bridge plate to affect the rate at which the bridge plate moves towards its deployed condition under the influence of gravity or, e.g., a biasing means, and/or a releasable locking mechanism may be provided which may be locked to prevent the bridge plate from being moved towards its deployed condition.

The one ore more guides may be arranged such that movement of the lift platform towards its lowered position causes movement of the bridge plate towards its stowed condition.

Optionally, a first guide is arranged to deflect the bridge plate towards its stowed condition as the lift platform moves towards its lowered position.

The one ore more guides may be arranged such that movement of the lift platform towards its raised position causes movement of the bridge plate towards its deployed condition.

Optionally, the first guide of the one or more guides is arranged to support, and influence the trajectory of, the bridge plate as it moves towards its deployed condition.

The first guide may be arranged to suitably guide the trajectory of the bridge plate as it moves towards its deployed condition, e.g. to control the extent and/or course of its movement so as to provide clearance between it and parts of the lift apparatus and/or parts of the vehicle that it moves relative to. Uncontrolled movement might cause the bridge plate to be deployed in an undesirable way, e.g. too soon, whereby it might become an impediment to raising and/or lowering the lift platform.

When the lift platform is stationary in a position within a certain range of positions, the bridge plate may be stationary, resting against the first guide which prevents the bridge plate from moving further towards its deployed condition. Once the lift platform has moved to a position outside of said range of positions, e.g. to its raised position, the position of the first guide may be such that it is no longer in the way of the bridge plate which would therefore be able to move into its deployed condition. Therefore, the guide can prevent the bridge plate from moving into its deployed condition too soon, by acting as a physical stop which the bridge plate impinges on and which the lift platform must move past in order for the bridge plate to move into its deployed condition.

The lift apparatus may further comprise a first profiled guide surface disposed on an underside of the bridge plate and arranged to cooperate with the first guide.

The profiled guide surface may be shaped and dimensioned to cooperate with the first guide in order to influence the extent to which the bridge plate has travelled towards its deployed condition when the lift platform is in a particular position or range of positions. The profiled guide surface may be formed by shaping the bridge plate itself, e.g. by grinding the bridge plate, or by securing a shaped portion onto the underside of the bridge plate.

Optionally, the movable connection assembly further comprises a base portion. Optionally, the base portion is arranged to be stationary relative to the vehicle when the lift platform is being moved between its lowered and raised positions; and the first guide is disposed on the base portion.

The first guide may be arranged to be stationary relative to the vehicle when the lift platform is being moved between its lowered and raised positions.

Optionally, a second guide of the one or more guides is arranged to deflect the bridge plate into a safety barrier orientation as the lift platform moves towards its lowered position.

The safety barrier orientation of the bridge plate may be an orientation of the bridge plate within a range of angles about a pivot axis thereof with respect to the plane of the lift platform. The range of angles may be from forty five (45) degrees to one hundred and thirty five (135) degrees. Preferably, in its safety barrier orientation the bridge plate is orientated at an angle of no less than eighty (80) degrees about the pivot axis thereof with respect to the plane of the lift platform. Preferably, in its safety barrier orientation the bridge plate is orientated at an angle of no more than one hundred (100) degrees about the pivot axis thereof with respect to the plane of the lift platform.

In its safety barrier orientation, the bridge plate can act as a barrier on a vehicle-side of the lift platform. If the lift apparatus is to be used, e.g., for providing wheel chair access to the vehicle, the barrier is a useful safety feature in that it can prevent a wheel chair from falling off the vehicle-side of the lift platform, or being positioned "too near" the vehicle-side of the lift platform. If orientation of the bridge plate at an angle of less than forty five (45) degrees or greater than one hundred and thirty five (135) degrees is suitable to provide such a barrier, then it may be used in some embodiments. For example, depending on the relative dimensions of the lift platform and the bridge plate, an angle of about fifteen (15) degrees may suffice to provide an obstacle suitable for, e.g., preventing a wheel chair from falling off the vehicle-side of the lift platform

The lift apparatus may further comprise first biasing means arranged to bias the bridge plate towards its deployed condition.

The one or more guides may act against the force of the spring and/or against gravity.

The first biasing means may comprise one or more, for example three, torsion bars each connected at a first end thereof to the lift platform and at a second end thereof to the bridge plate.

Optionally, the first biasing means is arranged to hold the bridge plate against the second guide as the lift platform moves towards its lowered position, to thereby hold the bridge plate in its safety barrier orientation as the lift platform moves towards its lowered position. The biasing means may thereby hold the bridge plate in its safety barrier orientation for a portion of the lift platform's movement towards its raised position

Optionally, the bridge plate is pivotally secured to the lift platform and is pivotable between its stowed condition and its deployed condition.

For instance, the bridge plate may be able to pivot between its stowed condition, in which it rests on and is substantially parallel to the lift platform, and its deployed condition in which it is unfolded so as to be, preferably, approximately parallel with the lift platform and extended across the gap between the floor of the vehicle and the lift platform in its raised position.

The movable connection assembly may comprise at least one lifting arm arranged to rotate about a movable connection assembly pivot axis to thereby move the lift platform between its lowered and raised positions.

The first and second guides may comprise a single guide.

The first and second guides may be respective guides. For example, the first and second guides may be disposed in different positions such that a first distance, measured from the first guide to the movable connection assembly pivot axis, is greater than a second distance, measured from the second guide to the movable connection assembly pivot axis.

The first and second guides may comprise one or more of a wheel, a roller, a castor and a low friction sliding element.

The first and second guides may be arranged to guide respective first and second parts of the travel of the bridge plate as the lift platform moves towards its raised position, although there may be a third part of said travel guided by both the first guide and the second guide, e.g. in a transition from said first part to said second part. For example, the first and second guides may be positioned so that, when the lift platform is in its lowered position, the straight-line distance from the second guide to the pivot axis of the bridge plate is greater than the straight-line distance from the first guide to the pivot axis of the bridge plate.

A second profiled guide surface may disposed on the underside of the bridge plate, which may be shaped and dimensioned to cooperate with the second guide in order to influence the extent to which the bridge plate has travelled towards its deployed condition when the lift platform is in a particular position or range of positions. The profiled guide surface may be formed by shaping the bridge plate itself, e.g. by grinding the bridge plate to form a channel, and/or by securing a shaped portion onto the underside of the bridge plate.

Optionally, the first guide comprises a guide arm, the guide arm being: pivotally connected to the movable connection assembly; pivotable between a stowed condition and a deployed condition; and arranged, when in its deployed condition, to deflect the bridge plate towards its stowed condition as the lift platform moves towards its lowered position, and/or to support, and influence the trajectory of, the bridge plate as it moves towards its deployed condition.

Optionally, the guide arm can be folded flat in order to be stowed, and its use allows the first guide to be positioned nearer the vehicle than the second guide is. If a guide is to be positioned to influence movement of the bridge plate as the lift platform moves between its lowered position and its raised position, positioning the guide horizontally nearer the vehicle requires the guide to also be positioned vertically nearer the floor of the vehicle (i.e. vertically higher) else the guide may not lie suitably in the course of the bridge plate's travel between its stowed and deployed conditions. Optionally, the arm can be folded flat in order to be stowed, and can be pivoted into a deployed condition in order to provide an abutment, at a distal end of the arm (a proximal end of the arm being connected to the movable connection assembly), which is vertically nearer the floor of the vehicle than the second guide is.

The lift apparatus may further comprise a second biasing means arranged to bias the guide arm towards its deployed condition.

Optionally, the movable connection assembly is further arranged to move the lift platform between a stowed condition and a deployed condition in which the lift platform can be moved between its lowered position and its raised position.

The movable connection assembly may be slidably connected to the vehicle, so that the lift platform can slide between its stowed condition and its deployed condition.

The arm may be biased into its deployed condition, e.g. by a coil spring or some other biasing means, which can cause the arm to be pivoted into its deployed condition as a result of the lift platform being moved into its deployed condition.

Optionally, a contact surface is arranged to contact the guide arm, and thereby cause the guide arm to pivot into its stowed condition, as the lift platform is moved into its stowed condition.

Absent at least one such contact surface, an actuation means may be required in order to move the arm into the stowed position so that the lift platform can be stowed, e.g. under a floor of the vehicle. Said contact surface may be arranged to contact the arm when the lift platform is being moved into its stowed condition, which contact can cause the arm to pivot into its stowed condition and obviates the need for an actuation means arranged to do so.

The invention may be better appreciated from the following description of preferred embodiments, by way of example only, with reference to the accompanying drawings in which:
Figure 1 is a perspective view of a lift apparatus in accordance with a first embodiment of the invention, showing part of a vehicle to which the lift apparatus has been secured; and
Figures 2a to 2l are side views of a second embodiment, similar to the embodiment of Figure 1, showing respective conditions of the lift apparatus as it is deployed, lowered and then raised to provide access to a vehicle to which it is attached.

Like elements in the described embodiments will be designated by the same reference numerals.

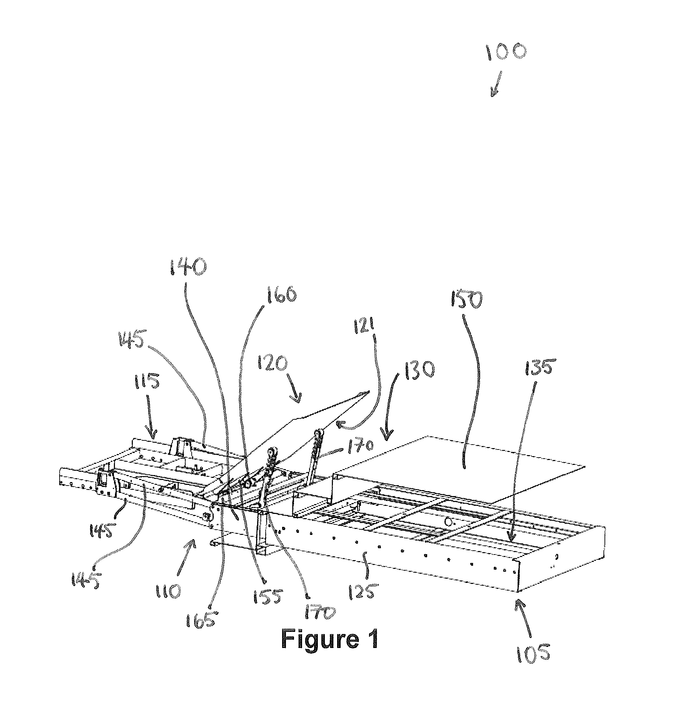

Referring first to Figure 1, in a first embodiment of the invention there is a lift apparatus 100 for a vehicle (not shown) having a raised floor, such as a city-to-city bus. The lift apparatus 100 comprises a housing 105, a connection assembly 110, a lift platform 115 and a bridge plate 120.

The housing 105 comprises a main frame 125 (sometimes called a cassette) secured, e.g. welded or bolted, to the vehicle, e.g. under some steps 130 for gaining access to the vehicle, and defining a generally cuboid inner volume 135.

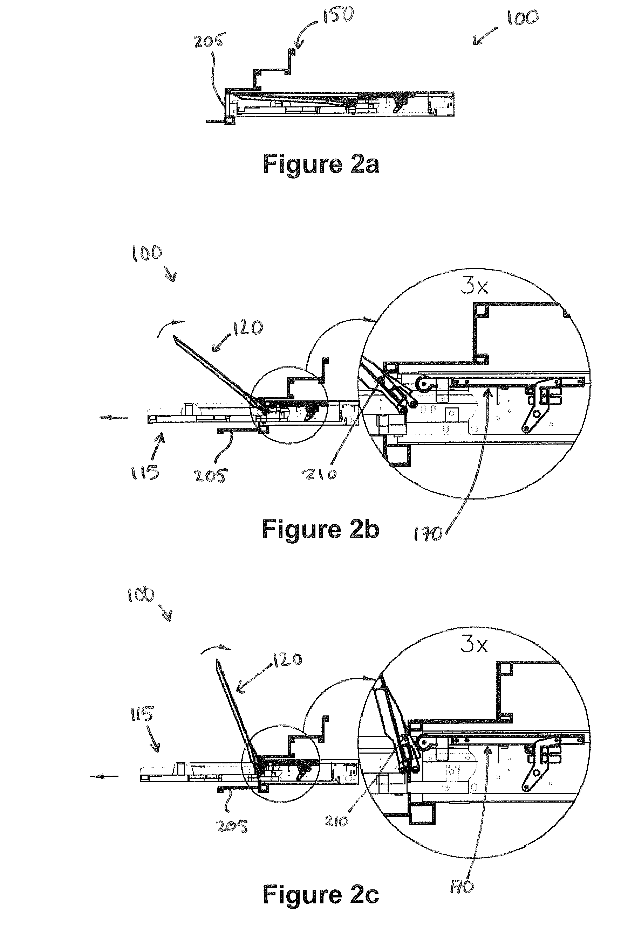

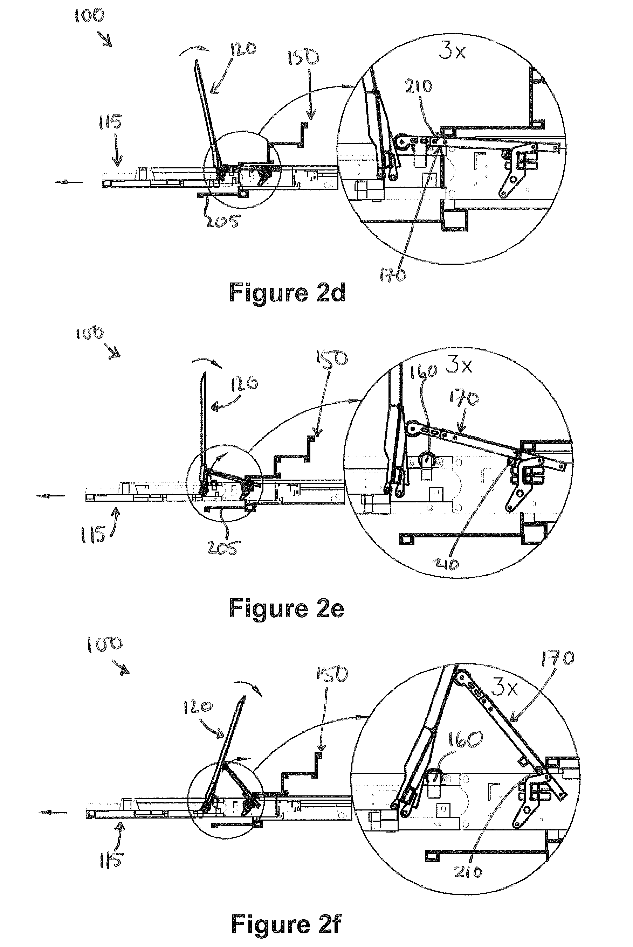

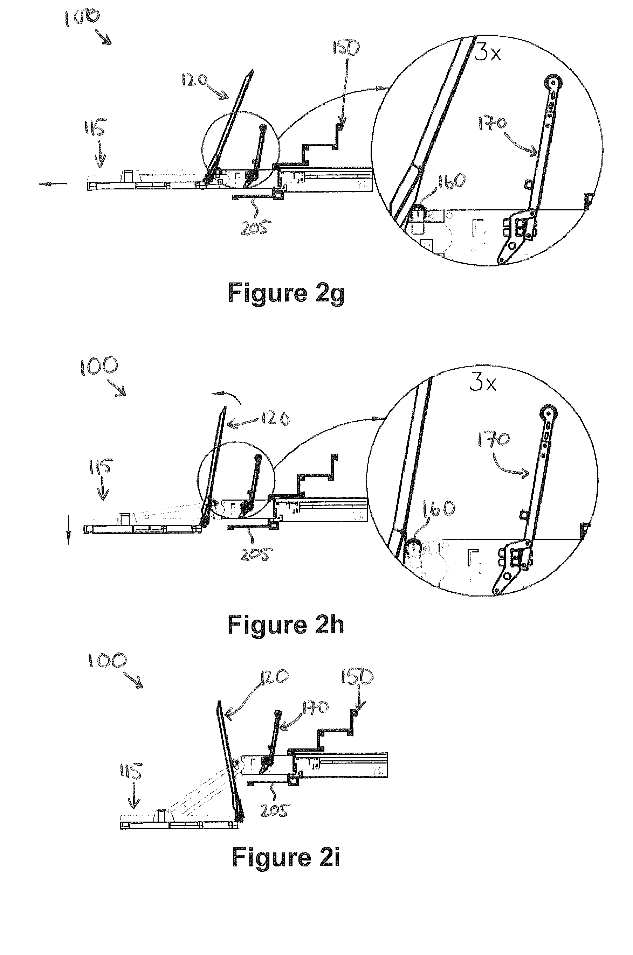

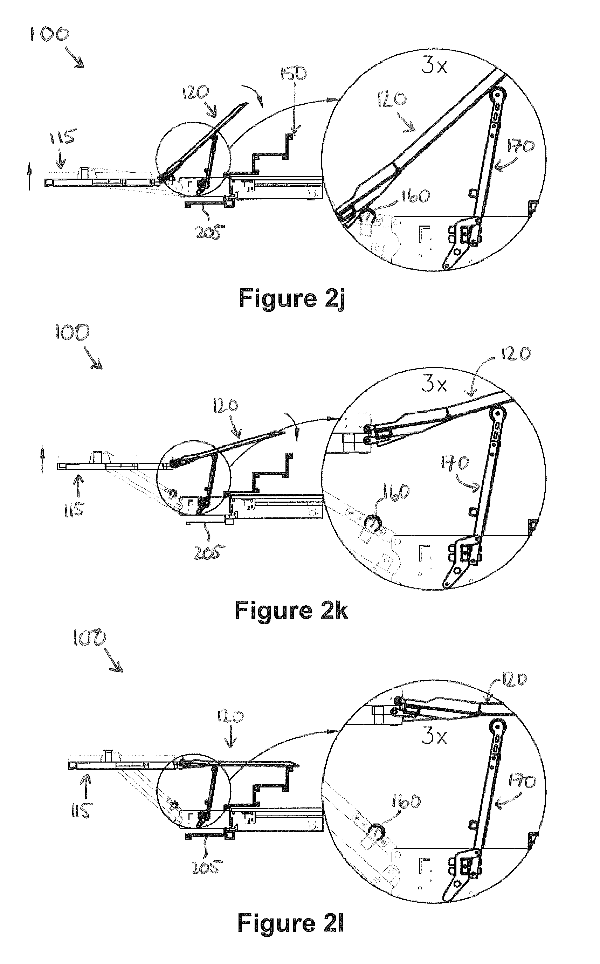

The connection assembly 110 comprises a base portion 140, slidably connected to the vehicle and driven by an electric motor (not shown). The electric motor is operable to cause the base portion 140 to slide relative to the main frame 125, thereby moving the lift platform 115 between a stowed condition (as shown in Figure 2a) and a deployed condition (as shown in Figures 2h to 2l). In the stowed condition of the lift platform 115, it 115, the connection assembly 110, and the bridge plate 120 are all contained within the inner volume 135 of the main frame 125.

The connection assembly 110 further comprises four hydraulically-driven lifting arms 145. Each lifting arm 145 is pivotally connected at a first end to the base portion 140, and at a second end to the lift platform 115.

A hydraulic actuator (not shown) is operable to rotate the arms about their respective pivotal connections to the base portion 140, thereby to lower or raise the lift platform 115. The hydraulic actuator and the electric motor are operable via a user-operable input device (not shown), which comprises four buttons and is connected to a controller that interprets signals from the input device and in response generates signals for controlling the hydraulic actuator and the electric motor.

The lifting arms' pivotal connections to the lift platform 115 are arranged to maintain the lift platform 115 in a generally horizontal orientation as the lift platform 115 is lowered or raised.

The lift platform 115 is a rigid, generally rectangular structure dimensioned to receive an object, such as a passenger in a wheel chair, to be lifted to a raised floor 150 of the vehicle.

The bridge plate 120 is a rigid, generally rectangular structure connected via hinges to a vehicle side of the lift platform 115. Its dimensions are similar to, but slightly smaller than, the dimensions of the lift platform 115. Therefore, in a stowed condition of the bridge plate 120, it can be folded flat such that it extends in a plane slightly above and approximately parallel to the plane of the lift platform 115, fitting between the lifting arms 145.

Biasing means (not shown) urges the bridge plate 120 towards a biased condition. The biasing means comprises three torsion bars (not shown) connected between the lift platform 115 and the bridge plate 120, positioned near the hinges which connect the bridge plate 120 to the lift platform 115. In modifications to this embodiment, a different number of torsion bars could be used; an additional or alternative (different type) biasing means could be used.

On an underside 121 of the bridge plate 120, which will be its top surface in its stowed condition, there are four profiled guide surfaces 155 arranged to cooperate with corresponding first and second guides to guide movement (described in more detail below) of the bridge plate 120 as it moves towards a deployed condition. Each profiled guide surface 155 consists of a tapering strip secured to the underside 121 of the bridge plate 120. The position and dimensions of each strip, and its angle of taper, influences the relationship between the orientation of the bridge plate 120 (e.g. the angle between it and the lift platform 115) and the position of the lift platform 115. For instance, if it is desired to reduce the extent to which the bridge plate 120 has travelled towards its deployed state (the angle of the bridge plate 120 with respect to the lift platform 115) at a given position of the lift platform 115 between its lowered and raised positions, this can be achieved by suitably altering the profile of one or more of the profiled guide surfaces 155.

The guides consist of first and second guides.

The first guide comprises two rollers 160, disposed on a cross brace 165 connected between upper left- and right-hand ones of the lifting arms 145. In the embodiment of Figure 1, one roller is disposed on a top surface of the cross brace and another is disposed on a side surface of the cross brace which faces the lift platform. In the embodiment of Figure 2a to 2l, both rollers are disposed on the top surface of the corresponding cross brace. In modification of these embodiment, a different number of rollers may be provided, and they may be disposed in other positions on the cross brace, or guide means other than rollers may be used.

The second guide comprises a pair of guide arms 170 connected to the connection assembly 110, the respective distal ends of which contact the bridge plate 120 during movement of the bridge plate between stowed and deployed conditions thereof.

The guide arms 170 are spring loaded (biased towards the deployed condition) and pivotally connected to the base portion 140. In the stowed condition, each guide arm 170 is orientated approximately parallel with the plane of the raised floor 150 of the vehicle. A cross member connects the guide arms 170 together for increased rigidity and to synchronise the respective orientations of the guide arms 170. In the deployed condition, the respective distal ends of the guide arms 170 contact and guide movement of the bridge plate 120 as it moves towards its deployed condition. A supported, guided transition of the bridge plate from its stowed condition to its deployed condition is thereby achieved.

Operation of the lift apparatus 100 will now be described with reference to Figures 2a to 2l.

As shown in Figure 2a, in the stowed condition of the lift platform 115, it 115, the connection assembly 110, the bridge plate 120 and the guide arms 170 are all contained within the inner volume 135 of the main frame 125.

In response to user operation of the input device, the base portion 140 slides relative to the main frame 125 under the influence of the electric motor, pushing open a pivotable door 205 which covers an opening of the main frame 125 in the stowed condition of the lift platform 115, and moving the lift platform 115 through the opening towards its deployed condition.

Referring to Figure 2b, as the lift platform 115 moves through the opening towards its deployed condition, the biasing means urges the bridge plate 120 towards its deployed condition. In this embodiment, the biasing means urges the bridge plate 120 to pivot away from the lift platform 115 about a pivot axis provided by the hinges which connect the bridge plate 120 to the lift platform 115.

A contact surface 210, which in this embodiment is disposed on the opening of the main frame 125, obstructs movement of the bridge plate 120 towards its deployed condition. As a consequence, the bridge plate 120 has pivoted only part of the way towards its deployed condition when the lift platform 115 has moved only part of the way towards its deployed condition, as show in Figure 2b. At which point, the bridge plate 120 is orientated at an acute angle with respect to the lift platform 115 and the guide arms 170 are in their stowed conditions, i.e. extending in a plane approximately parallel to the raised floor 150 of the vehicle, inside the inner volume 135 of the main frame 125.

Referring to Figures 2c to 2f, as the lift platform 115 moves further through the opening towards its deployed condition, the hinges connecting the bridge plate 120 to the lift platform 115 move towards and then through the opening, whereby the bridge plate 120 is permitted to pivot further towards its deployed condition.

As the bridge plate 120 pivots further towards its deployed condition, it comes into contact with the distal ends of the guide arms 170. Initially, the bridge plate 120 rests against the contact surface 210 and the distal ends of the guide arms 170, as shown in Figure 2c, and then it rests against the distal ends of the guide arms 170 but not the contact surface 210, as shown in Figures 2d to 2f.

It will be appreciated from Figures 2b to 2f that as the lift platform 115 is being deployed the contact surface 210 guides a first part of the bridge plate's travel towards its deployed condition, and then the guide arms 170 guide a second part of that travel. The contact surface 210 and the guide arms 170 prevent the bridge plate 120 from reaching its deployed condition before the lift platform 115 reaches its deployed condition in this embodiment.

As will be appreciated from a comparison of Figures 2f and 2g, in the final part of the lift platform's travel into its deployed state, the bridge plate 120 pivots further towards its deployed condition and comes into contact with the first guide, more specifically the first and second rollers 160 in this embodiment

Initially, the bridge plate 120 rests against the roller 160 and the distal ends of the guide arms 170, as shown in Figure 2f, and then it rests against the roller 160 but not the guide arms 170 which are then free to travel the rest of the way into their deployed conditions, as shown in Figures 2g.

Referring to Figures 2h and 2i, after the lift platform 115 has reached its deployed condition, it can be lowered towards ground level in response to user operation of the input device, e.g. to allow a passenger to board the lift platform 115.

As the lift platform 115 is lowered, the bridge plate 120 slides over the rollers 160 of the first guide, which cause the bridge plate 120 to pivot slightly towards its stowed condition. When the lift platform 115 reaches a lowered position, i.e. a position at which the user deems the lift platform 115 to be suitably low to permit access to the lift platform 115, the bridge plate 120 will be in safety barrier orientation.

The specific orientation of the bridge plate 120 in its safety barrier orientation will depend on how far the lift platform 115 was lowered in order to reach the lowered position. It could be within a range of angles with respect to the plane of the lift platform 115, for instance from forty five degrees to one hundred and thirty five degrees.

In its safety barrier orientation, the bridge plate 120 can act as a barrier to prevent, e.g., a wheel chair being pushed off the vehicle side of the lift platform 115 and into a gap between the lift platform 115 and the vehicle. As will be appreciated from Figures 2g to 2i, for example, the bridge plate 120 may be in its safety barrier orientation for part of the travel of the lift platform 115 as it moves from its lowered position to its raised position and vice versa.

Referring to Figures 2i, 2h and then 2j to 21, in response to user operation of the input device the lift platform 115 can be moved from the lowered position towards a raised position, e.g. after a passenger has boarded the lift platform 115.

The first and second guides are arranged such that movement of the lift platform 115 towards its raised position causes movement of the bridge plate 120 towards its deployed condition.

Due to the pivotal connections of the lifting arms 145, movement of the lift platform 115 towards the raised position will describe an arc, the lift platform's movement having a horizontal component towards the vehicle as it is raised. During this movement, the bridge plate 120 pivots towards its deployed condition, sliding over the roller 160 of the first guide until it comes into contact with the distal ends of the guide arms 170 (as shown in Figure 2j).

As the lift platform 115 continues to move towards the raised position, the arms support and guide the bridge plate 120 as it pivots towards its deployed condition.

When the lift platform 115 is in the raised position, the bridge plate 120 is supported by the lift platform 115 and the raised floor 150 of the vehicle, and bridges a gap between them. Therefore, in the raised position, a passenger can cross the bridge plate 120 to gain access to the raised floor 150 of the vehicle from the lift platform 115.

It will be understood that, in response to user operation of the input device, the lift platform 115 can be lowered from the raised position, and then moved from its deployed condition to its stowed condition, and the corresponding movement of the bridge plate 120 will be substantially equal and opposite to that described above with reference to the lift platform 115 being moved towards the raised position, and towards its deployed condition. The first and second guides are arranged such that movement of the lift platform towards its lowered position causes movement of the bridge plate towards its stowed condition. It will be appreciated that the first and second guides are arranged to move the bridge plate 115 towards its stowed condition against the force of the biasing means and, at some points, against gravity.

In particular, as the lift platform 115 is moved towards its lowered position, the distal ends of the guide arms 170 will deflect the bridge plate towards its stowed condition. Accordingly, the first and second guides obviate the need for actuation means to move the bridge plate 120 towards its stowed condition, such as hydraulic actuators which would be necessary for bridge plates large enough (e.g. 800 mm long) to be used with, e.g., city-to-city buses. Therefore, a cheaper and more reliable lift apparatus can be implemented thereby.

As the lift platform 115 is moved towards its stowed condition, the guide arms 170 will be urged towards their stowed conditions by the contact surface 210 as they move past it.

Then, as the lift platform 115 is moved towards its stowed condition, the pivoting of the guide arms 170 towards their stowed conditions will cause their distal ends to come into contact with the bridge plate 120 and urge it towards its stowed condition.

Then, as the lift platform 115 is moved towards its stowed condition, the bridge plate 120 will be urged towards its stowed conditions by the contact surface 210 as it move though the opening into the inner volume 135 of the main frame 125.

Finally, in the stowed condition of the lift platform 115, it 115, the connection assembly 110, the bridge plate 120 and the guide arms 170 will all be contained within the inner volume 135 of the main frame 125.

It will be appreciated that different arrangements of guides, types of guide, locations of guides, locations of pivot points and/or types of biasing means may be envisaged by the skilled person to put into effect the invention as defined in the claims.

In one alternative embodiment, the bridge plate may be fully deployed while the lift platform is still being raised, such that the lift platform together with the deployed bridge plate are moved into a final position at which the bridge plate bridges a gap between the raised floor of the vehicle and the lift platform.

In another alternative embodiment, when the lift platform is being moved from the lowered position to the raised position, the bridge plate may be held in an intermediate orientation (e.g. the upright position), between the stowed condition and the deployed condition, until the lift platform reaches the raised position, and then the bride plate is moved into its deployed condition.

## Claims

1. A lift apparatus for a vehicle, comprising a movable connection assembly, a lift platform and a bridge plate, wherein:
the movable connection assembly is arranged to connect the lift platform to the vehicle;
the movable connection assembly is arranged to move the lift platform between a lowered position and a raised position;
the bridge plate is connected to the lift platform and is movable relative thereto between a stowed condition and a deployed condition; and
the bridge plate is arranged, in its deployed condition, to bridge a gap between a raised floor of the vehicle and the lift platform in its raised position,
the lift apparatus further comprising one or more guides arranged to translate movement of the lift platform between its raised and lowered positions into movement of the bridge plate between its deployed and stowed conditions.

2. A lift apparatus according to claim 1, wherein a first guide is arranged to deflect the bridge plate towards its stowed condition as the lift platform moves towards its lowered position.

3. A lift apparatus according to claim 2, wherein the first guide of the one or more guides is arranged to support, and influence the trajectory of, the bridge plate as it moves towards its deployed condition.

4. A lift apparatus according to claim 2 or claim 3, further comprising a first profiled guide surface disposed on an underside of the bridge plate and arranged to cooperate with the first guide.

5. A lift apparatus according to any one of claims 2 to 4, wherein the movable connection assembly further comprises a base portion, and wherein:
the base portion is arranged to be stationary relative to the vehicle when the lift platform is being moved between its lowered and raised positions; and
the first guide is disposed on the base portion.

6. A lift apparatus according to any foregoing claim, wherein a second guide of the one or more guides is arranged to deflect the bridge plate into a safety barrier orientation as the lift platform moves towards its lowered position, such that the bridge plate acts as a safety barrier to prevent movement past the bridge plate of an object, such as a passenger, on the lift platform.

7. A lift apparatus according to any foregoing claim, further comprising first biasing means arranged to bias the bridge plate towards its deployed condition.

8. A lift apparatus according to claim 7 when dependent on claim 6, wherein the first biasing means is arranged to hold the bridge plate against the second guide as the lift platform moves towards its lowered position, to thereby hold the bridge plate in its safety barrier orientation as the lift platform moves towards its lowered position.

9. A lift apparatus according to any foregoing claim, wherein the bridge plate is pivotally secured to the lift platform and is pivotable between its stowed condition and its deployed condition.

10. A lift apparatus according to any foregoing claim when dependent on claim 2, wherein the first guide comprises a guide arm, the guide arm being:
pivotally connected to the movable connection assembly;
pivotable between a stowed condition and a deployed condition; and
arranged, when in its deployed condition, to deflect the bridge plate towards its stowed condition as the lift platform moves towards its lowered position, and/or to support, and influence the trajectory of, the bridge plate as it moves towards its deployed condition.

11. A lift apparatus according to claim 10, further comprising second biasing means arranged to bias the guide arm towards its deployed condition.

12. A lift apparatus according to any foregoing claim, wherein the movable connection assembly is further arranged to move the lift platform between a stowed condition and a deployed condition in which the lift platform can be moved between its lowered position and its raised position.

13. A lift apparatus according to claim 12, when dependent on claim 10 or claim 11, further comprising a contact surface, wherein the contact surface is arranged to contact the guide arm, and thereby cause the guide arm to pivot into its stowed condition, as the lift platform is moved into its stowed condition.

14. A lift apparatus for a vehicle, substantially as described herein with reference to, and as shown in, the accompanying drawings.
